# EUROPEAN PATENT APPLICATION

(11) **EP 0 823 323 A1**
(43) Date of publication of application: **11.02.1998**
(21) Application number: 97113552.0
(22) Date of filing: 06.08.1997
(51) Int. Cl.: B29D 31/505, B29C 45/16

(54) **Coinjection method for plastic components, particularly for shoes**

(30) Priority: 08.08.1996 IT TV960102
(71) Applicant: Benetton Sportsystem S.p.A., 31040 Trevignano (Treviso) (IT)
(72) Inventor: Sandri, Armando, 31044 Montebelluna (Treviso) (IT); Bacchetto, Maurizio, 31031 Caerana San Marco (Treviso) (IT)
(74) Representative: Modiano, Guido, Dr.-Ing.

(57) **Abstract**

The present invention relates to a method for coinjecting components made of plastics, particularly for shoes, which uses a single coinjection apparatus. The method provides for a first injection in a mold of a first material in an amount between 60% and 80% of the total weight of the component so as to form the outside walls of the component. This is followed immediately by a second injection of a second material which is chemically compatible with the first material and has similar rheological characteristics, in an amount between 40% and 20% of the total weight of the component. The second material forms the inner layer, which is contained within the walls of the component, and is injected at a region of the component which is subjected to stresses during use.

## Description

The present invention relates to a method for coinjecting components made of plastics, particularly for shoes, which uses a single coinjection apparatus.

The method of coinjection or of multiple-material and multiple-color injections is known and used essentially to produce items such as brooms, telephone keypads, combs, bumpers and headlights.

These known products are essentially characterized in that they have an outer shell which is obtained with a material which is different from the one that constitutes the internal core of said element.

This technology is therefore used essentially to produce items which require an external body made of a specific material which does not need to constitute the internal part of the item as well, and which, in this last case, can therefore be constituted by much lower-quality material which is suitable only to fill a given internal cavity.

As an alternative, two different materials are used to achieve aesthetic effects such as for example a "tortoise-shell" coloring effect, as for example for combs.

This known method can be easily applied to small parts which have linear and not excessively complex shapes, such as for example bumpers and combs, but at the same time have minimum thicknesses which are not excessively small, since this would prevent the flow of the second material inside the first one.

A problem of the prior art is in fact that for excessively complicated shapes the flow of the second material inside the first one slows, whilst in the case of very low thicknesses the cooling time is so short that it prevents the easy flow of the second material inside the first one.

The aim of the present invention is therefore to solve the described problems, eliminating the drawbacks of the cited prior art by providing a coinjection method which can also be applied to components which have complicated and/or rounded shapes such as shoes and particularly the shells and quarters of a ski boot or of a skate.

Within the scope of this aim, an important object is to provide a coinjection method which allows to produce components so as to achieve optimum control over the diffusion of the material.

Another object is to provide a coinjection method which can also be applied to components which have parts with considerably different and even low thicknesses.

Another object is to provide a coinjection method which allows to manufacture the corresponding components at low costs.

This aim, these objects and others which will become apparent hereinafter are achieved by a method for coinjecting components made of plastics, particularly for shoes, which uses a single coinjection apparatus, characterized in that it provides for a first injection in a mold of a first material in an amount between 60% and 80% of the total weight of said component so as to form the outer walls of said component, followed immediately by a second injection of a second material which is chemically compatible with said first material and has similar rheological properties, in an amount between 40% and 20% of the total weight of said component, said second material forming the inner layer, which is contained within said walls of said component, and being injected at a region of said component which is subjected to stresses during use.

Further characteristics and advantages of the invention will become apparent from the detailed description of a particular but not exclusive embodiment, illustrated only by way of non-limitative example in the accompanying drawings, wherein:

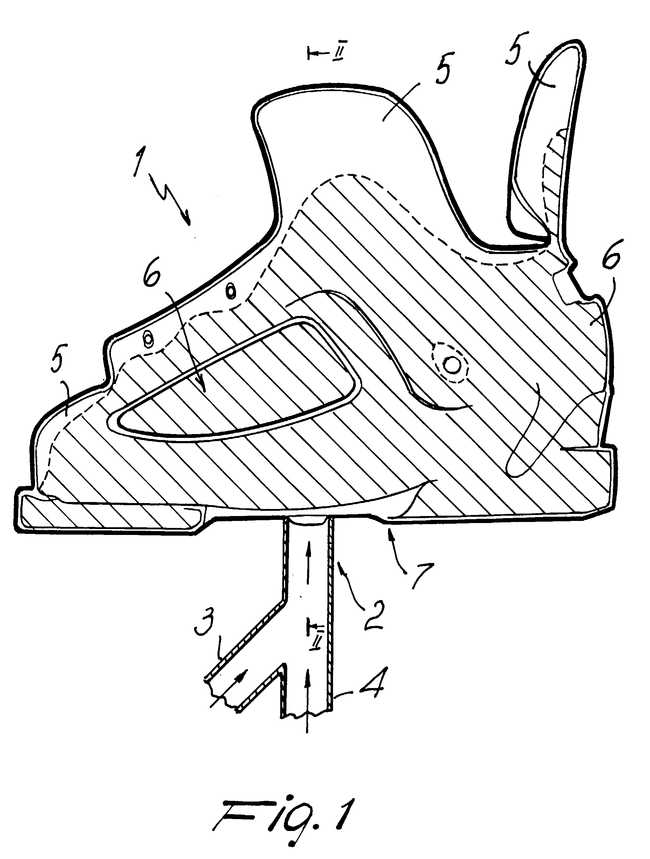

Figure 1 is a side view of a shell of a ski boot, with the injection nozzle, shown in cross-section, applied thereto;

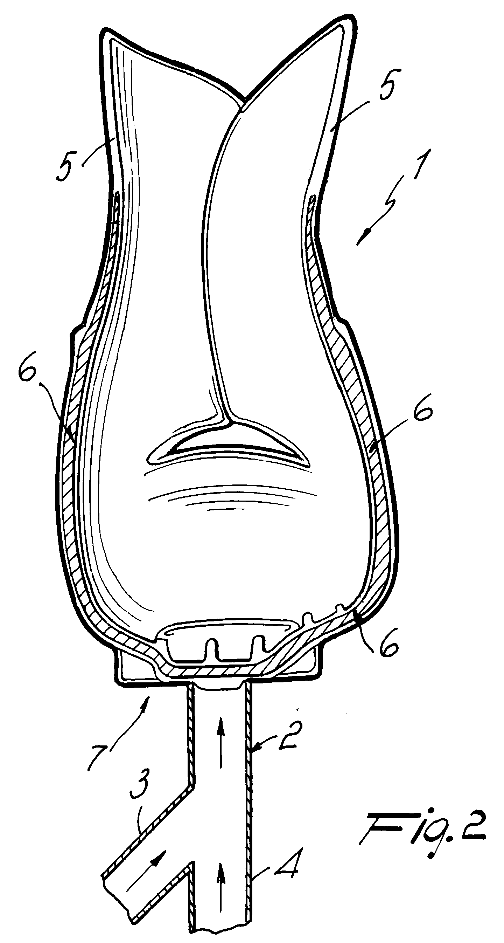

Figure 2 is a sectional view, taken along section line II-II of Figure 1.

With reference to the above figures, numeral 1 designates a shell of a ski boot, which has been used as reference merely to show a field of application of the method for coinjecting components made of plastics.

According to the method, by means of a single coinjection apparatus which has a nozzle 2 into which a first duct 3 and a second duct 4 lead, components made of plastics can be obtained having complex shapes and rounded surfaces, such as for example those of shoes.

The method provides for a first injection in a mold of a first material, designated by reference numeral 5, in an amount between 60% and 80% of the total weight of the component and therefore of the shell 1.

Said first material can optionally be of the soft type and can be constituted for example by polyurethane having a hardness of 54 Shore D, of the kind known for example as Desmopan 150 S and manufactured by Bayer AG.

Said first material 5 could, for example, constitute the outer walls of the component and therefore of the shell 1.

The method then provides for a second injection of a second material, designated by reference numeral 6, directly after the first injection in order to maintain continuity of the fluid stream and to take advantage of the better flow ability of the central region of the first layer before the advancement of setting prevents its flow.

Said material can optionally but not necessarily be a material which is slightly more rigid and for example polyurethane with a hardness of 67 Shore D, for example of the type known as Desmopan 8410 and manufactured by Bayer AG.

As an alternative, it is possible to use styrene materials such as ABS or polystyrene.

It is significant that the amount of the second material is between 40% and 20% of the total weight of the component and therefore, for example, of the shell.

The second material 6 thus forms a layer inside the component which is contained within the walls of said component.

As an alternative, it is possible to have rigid material inside and use soft material as a filler.

The method entails performing coinjection at a region of the component which is subjected to stresses during use: in the particular embodiment shown by way of example, the nozzle 2 must be arranged at the sole 7 of the shell 1, which is a region which has considerable thicknesses indeed because of the stresses that act between the sole and the ski binding.

The first and second materials used for the two injections must of course be chemically compatible and must have similar rheological properties, so that they can perfectly adhere to each other without creating dangerous separated layers which can slip with respect to each other inside the component and could irreparably damage the structure.

It has thus been observed that the invention has achieved the intended aim and objects, a coinjection method having been provided which can also be applied to components having complicated and/or rounded shapes such as shoes and in particular the shells and quarters of a ski boot or of a skate.

The described coinjection method allows to produce components so as to achieve optimum control over the diffusion of the material by virtue of the particular determination of the ratio of the amount thereof to be injected.

Finally, the method allows to achieve considerable economic savings, since it carried out entirely by using a single nozzle with a single apparatus.

The invention is of course susceptible of numerous modifications and variations, all of which are within the scope of the same inventive concept. The materials and the dimensions of the invention may of course also be the most pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Method for coinjecting components made of plastics, particularly for shoes, which uses a single coinjection apparatus, characterized in that it provides for a first injection in a mold of a first material in an amount between 60% and 80% of the total weight of said component so as to form the outer walls of said component, followed immediately by a second injection of a second material which is chemically compatible with said first material and has similar rheological properties, in an amount between 40% and 20% of the total weight of said component, said second material forming the inner layer, which is contained within said walls of said component, and being injected at a region of said component which is subjected to stresses during use.

2. Method according to claim 1, preferably applicable to components of shoes such as shells and/or quarters of ski boots or skates, characterized in that a first injection in a mold of a first material is performed in an amount between 60% and 80% of the total weight of said component by means of a single nozzle into which a first duct and a second duct lead.

3. Method according to claims 1 and 2, characterized in that said first material is advantageously of the soft type.

4. Method according to claims 1 and 2, characterized in that said first material advantageously constitutes the outer walls of said component.

5. Method according to claim 1, characterized in that it provides for a second injection of a second material directly after said first injection in order to maintain continuity of the fluid stream and to take advantage of the greater flow ability of the central region of said first layer before the advancement of setting prevents its flow.

6. Method according to claims 1 and 5, characterized in that said second material is advantageously of the rigid type.

7. Method according to claims 1 and 5, characterized in that the amount of said second material is between 40% and 20% of the total weight of said component.

8. Method according to claim 1, characterized in that said second material forms a layer which is internal with respect to said component.

9. Method according to one or more of the preceding claims, characterized in that said coinjection is performed at a region of said component which is subjected to stresses during use, such as the region of the sole for a shell of a shoe.
